# EUROPÄISCHE PATENTANMELDUNG

(11) **EP 0 853 012 A1**
(43) Veröffentlichungstag der Anmeldung: **15.07.1998**
(21) Anmeldenummer: 97100318.1
(22) Anmeldetag: 10.01.1997
(51) Int. Cl.: B60J 7/22

(54) **Windleitelement für ein Fahrzeugdach**

(71) Anmelder: WEBASTO KAROSSERIESYSTEME GmbH, D-82131 Stockdorf (DE)
(72) Erfinder: Watzlawick, Robert, 81477 München (DE); Entenmann, Karin, 82152 Planegg (DE); Grussler, Martin, 82409 Wildsteig (DE)
(74) Vertreter: Wiese, Gerhard

(57) **Zusammenfassung**

Die Erfindung betrifft ein Windleitelement für ein Fahrzeugdach mit einer verschließbaren Dachöffnung (5) mit einem entlang der Vorderkante der Dachöffnung (5) angeordneten Windleitblatt (7), welches um eine quer zur Fahrzeuglängsachse liegende Achse schwenkbar ist und sich bei verschlossener Dachöffnung (5) unterhalb des Dachniveaus befindet oder auf Dachniveau als Abdeckung mindestens eines Teils der Dachöffnung (5) wirkt, sowie mit einer Verstellvorrichtung für das Windleitblatt (7), mit welcher das Windleitblatt in eine Stellung bringbar ist, in welcher die anströmende Luft nach oben geleitet wird. Die Verstellvorrichtung ist dabei so ausgebildet, daß das Windleitblatt (7) zusätzlich in eine Stellung bringbar ist, in welcher mindestens ein Teil der anströmenden Luft nach unten geleitet wird.

## Beschreibung

Die Erfindung betrifft ein Windleitelement für ein Fahrzeugdach mit einer verschließbaren Dachöffnung mit einem entlang der Vorderkante der Dachöffnung angeordneten Windleitblatt, welches um eine quer zur Fahrzeuglängsachse liegende Achse schwenkbar ist und sich bei verschlossener Dachöffnung unterhalb des Dachniveaus befindet oder auf Dachniveau als Abdeckung mindestens eines Teils der Dachöffnung wirkt, sowie mit einer Verstellvorrichtung für das Windleitblatt, mit welcher das Windleitblatt in eine Stellung bringbar ist, in welcher die anströmende Luft nach oben geleitet wird.

Ein solches gattungsgemäßes Windleitelement ist beispielsweise aus DE-PS-39 22 874 und aus DE-PS-39 24 036 bekannt. Bei der aus DE-PS-39 22 874 bekannten Anordnung bewirkt die Öffnungs- bzw. Schließbewegung eines Deckels ein selbsttätiges Ausstellen bzw. Zurückstellen eines an der Vorderkante der Dachöffnung angeordneten Windabweiserblatts. In der ausgestellten Position des Windabweiserblatts befindet sich die Hinterkante des Windabweiserblatts oberhalb des Dachniveaus und oberhalb der Vorderkante des Windabweiserblatts, so daß anströmende Luft im Bereich der Vorderkante der Dachöffnung nach oben gelenkt wird, was zum einen eine direkte Anströmung der Fahrzeuginsassen verhindert und zum anderen eine Verminderung der Geräuschentwicklung der anströmenden Luft bewirkt. Bei der aus DE-PS-39 24 036 bekannten Anordnung ist das Windleitelement als Entlüftungsklappe ausgebildet, die in Schließstellung die Dachöffnung vollständig verschließt und um die Vorderkante in eine Entlüftungsstellung verschwenkt werden kann, in welcher die Hinterkante der Entlüftungsklappe angehoben ist, so daß der Fahrzeuginnenraum entlüftet werden kann. Dabei wird in ähnlicher Weise ebenfalls eine direkte Anströmung der Fahrzeuginsassen verhindert und eine Verminderung der Geräuschentwicklung der anströmenden Luft bewirkt.

Beide Funktionen sind vor allem bei höheren Fahrzeuggeschwindigkeiten von Bedeutung. Im Bereich niedrigerer Fahrgeschwindigkeiten, z.B. im Stadtverkehr, wäre es jedoch vor allem bei heißer Witterung wünschenswert, Außenluft in größeren Mengen über die Dachöffnung in den Fahrzeuginnenraum einzuleiten.

Aus DE-PS-28 32 341 ist ein Windabweiser in Form eines im Vorderbereich einer Dachöffnung fest angebrachten, nach hinten gewölbten Dachaufsatzes mit einer Belüftungsklappe, die im hinteren Bereich des Dachaufsatzes angeordnet und um eine Achse in der Längsmitte der Klappe schwenkbar ist, bekannt. Die Klappe erstreckt sich über einen Teil der Länge des Dachaufsatzes und ist oberhalb des Dachniveaus angeordnet. Die Klappe kann über einen Handgriff manuell so verschwenkt werden, daß anströmende Luft nach unten in das Fahrzeuginnere geleitet wird. Die Stärke des Belüftungsstromes hängt dabei von der Klappenstellung ab. Die Klappe ist jedoch nicht für eine Luftumlenkung nach oben vorgesehen. Diesen Zweck soll der feste Dachaufsatz erfüllen.

Ein wesentlicher Nachteil der aus DE-PS-28 32 341 bekannten Anordnung besteht in der festen Anbringung des Dachaufsatzes auf dem Fahrzeugdach. Dabei bewirkt der Dachaufsatz einen dauerhaft erhöhten Luftwiderstand und damit einen dauerhaft erhöhten Kraftstoffverbrauch des Fahrzeuges. Ferner kann die Dachfläche unterhalb des feststehenden Dachaufsatzes nur schlecht gereinigt werden. Speziell in automatischen Wascheinrichtungen können sich Probleme ergeben. Ferner kann der feste Dachaufsatz eine erhebliche ästhetische Beeinträchtigung bedeuten, die auch bei geschlossenem Fahrzeugdach, also während der überwiegenden Nutzungszeit, auftritt.

Es ist Aufgabe der vorliegenden Erfindung, ein Windleitelement für Fahrzeugdächer zu schaffen, das sowohl eine Ablenkung der anströmenden Luft nach oben als auch eine aktive Belüftung der Fahrgastzelle über die Dachöffnung ermöglicht und bei geschlossener Dachöffnung eine möglichst geringe Beeinträchtigung der Fahrzeugeigenschaften, insbesondere hinsichtlich Luftwiderstand, Reinigbarkeit und ästhetischer Wirkung, bewirkt.

Diese Aufgabe wird, ausgehend von einem Windleitelement der eingangs erwähnten Art, dadurch gelöst, daß die Verstellvorrichtung so ausgebildet ist, daß das Windleitblatt in eine Stellung bringbar ist, in welcher mindestens ein Teil der anströmenden Luft nach unten geleitet wird.

Die vorteilhafte Wirkung dieser Ausbildung besteht darin, daß die Windabweiserfunktion, d.h. die Luftumlenkung nach oben, und die Belüftungsfunktion für die Fahrgastzelle, d.h. Luftumlenkung nach unten, unter Vermeidung eines festen Dachaufsatzes in einfacher Weise erzielt werden.

In vorteilhafter Ausgestaltung ist dabei vorgesehen, daß bei der Stellung des Windleitblatts, in welcher mindestens ein Teil der anströmenden Luft nach unten geleitet wird, die Vorderkante des Windleitblatts - zumindestens teilweise - oberhalb des Dachniveaus und oberhalb der Hinterkante des Windleitblatts liegt. Auf diese Weise kann die erfindungsgemäße Funktion bei einer möglichst einfachen Formgebung des Windleitblatts erzielt werden.

In weiterer vorteilhafter Ausgestaltung der Erfindung ist ein Deckel vorgesehen, welcher die Dachöffnung mindestens zum Teil verschließt, wobei das Windleitelement als Windabweiser ausgebildet ist. Dies bietet die Möglichheit, eine große Dachöffnung in Abhängigkeit von beispielsweise Sonneneinstrahlung und Lufttemperatur selektiv freizulegen, so daß den Bedürfnissen der Fahrzeuginsassen hinsichtlich Frischluftzufuhr und Lichteinfall bestmöglich entsprochen werden kann.

Bei einer Ausführungsform der Erfindung ist vorgesehen, daß das Windleitblatt an seiner Vorderkante mit einer Scherenanordnung und im Mittelbereich an den beiden Stirnseiten schwenkbar mit jeweils dem einen Ende eines Ausstellhebels verbunden ist, dessen anderes Ende dachfest schwenkbar befestigt ist. Diese Ausführungsform gestattet eine große Kraftübertragung auf das Windleitblatt.

Bei einer anderen Ausführungsform der Erfindung ist vorgesehen, daß der Verstellmechanismus an den beiden Stirnseiten des Windleitblatts jeweils als Doppelgelenkanordnung ausgebildet ist. Diese Ausführungsform ermöglicht eine einfache Fertigung und Montage des Windleitelements.

Bei beiden Ausführungsformen kann die Verstellung des Windleitblatts in Abhängigkeit von der Fahrzeuggeschwindigkeit und/oder der Außentemperatur erfolgen. Dies erlaubt eine besonders flexible Anpassung des Frischluftbedarfs in der Fahrgastzelle.

Bei einer weiteren Ausführungsform ist die Verstellvorrichtung so ausgebildet, daß die Stellung des Windleitelements jeweils von der Stellung des Deckels bestimmt ist. Bei dieser Ausführungsform ist der Belüftungsgrad über die vom Fahrzeuginsassen gewählte Stellung des Deckels selbsttätig festgelegt, wodurch auf einen separaten Antrieb des Verstellmechanismus des Windleitelements verzichtet werden kann, ohne daß eine Handbedienung des Windleitelements erforderlich würde.

Weitere bevorzugte Ausformungen der Erfindung ergeben sich aus den Unteransprüchen.

Ausführungsbeispiele der Erfindung sind nachfolgend unter Bezug auf die Zeichnungen erläutert. Es zeigen:
- FIG. 1a bis 1c: Querschnittansichten eines Fahrzeugdach mit unterschiedlichen Ausführungsformen eines erfindungsgemäßen Windleitelements in Schließstellung;
- FIG. 2: eine Querschnittansicht des Fahrzeugdaches mit Windleitelements in Entlüftungsstellung bei geöffnetem Deckel;
- FIG. 3a und 3b: vergrößerte Seitenansichten einer ersten Ausführungsform eines erfindungsgemäßen Windleitelements in Entlüftungs- bzw. Belüftungsstellung;
- FIG. 4: eine Ansicht des Windleitelements aus FIG. 3b in Pfeilrichtung;
- FIG. 5 bis 7: Seitenansichten einer zweiten Ausführungsform eines erfindungsgemäßen Windleitelements in Neutralstellung, Entlüftungs- bzw. Belüftungsstellung;
- FIG. 8a bis 8d: schematische Querschnittansichten einer alternativen Ausführungsform eines Fahrzeugdaches mit einem erfindungsgemäßen Windleitelement in verschiedenen Stellungen des Deckels; und
- FIG. 9a bis 9e: vergrößerte Querschnittansichten der Ausführungsform aus FIG. 8a bis 8d im verschiedenen Deckelstellungen.
- FIG. 10 und 11: Querschnittansichten einer weiteren Ausführungsform eines erfindungsgemäßen Windleitelements;
- FIG. 12 und 13: einen Querschnitt und eine Draufsicht eines weiter abgewandelten Windleitelements; sowie
- FIG. 14: eine Querschnittansicht einer weiteren Ausführungsform eines erfindungsgemäßen Windleitelements.

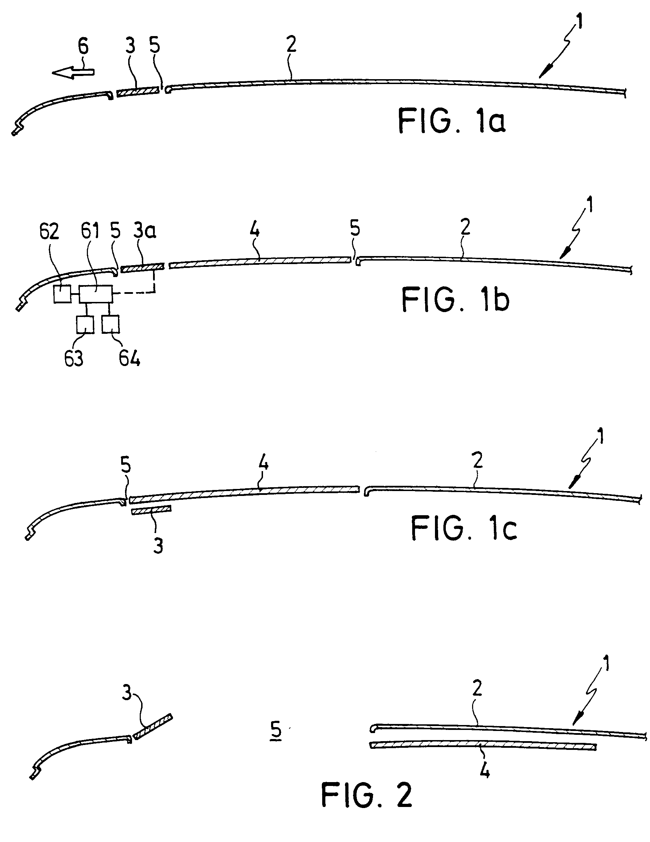

FIG. 1a bis 1c zeigen schematisch verschiedene Ausführungsformen eines Fahrzeugdachs 1 mit einer Dachhaut 2, einem Windleitelement 3 bzw. 3a und einer Dachöffnung 5, wobei die Dachöffnung 5 ausschließlich von einem Deckel 4 (FIG. 1c) von dem Deckel 4 und dem Windleitelement 3a (FIG. 1b) oder ausschließlich von dem Windleitelement 3a (FIG. 1a) verschlossen sein kann. Mit "Dachniveau" sei im folgenden die Höhe der Oberseite der Dachhaut 2 bezeichnet. Die Bezeichnungen "vorn" und "hinten" beziehen sich auf die Fahrtrichtung 6.

Bei den Ausführungsformen gemäß FIG. 1a und 1b ist das Windleitelement als Lüftungsklappe 3a ausgeführt. In FIG. 1a deckt dabei die Lüftungsklappe 3a die gesamte Dachöffnung ab, so daß ein zusätzlicher Deckel fehlt. In FIG. 1b ist die Lüftungsklappe 3a auf Dachniveau vor dem Deckel 4 angeordnet und übernimmt in dieser Stellung die Funktion der Abdeckung des von dem Deckel 4 nicht erfaßten Bereichs der Dachöffnung 5. Bei der Ausführungsform von FIG. 1c ist das Windleitelement als Windabweiser 3 ausgebildet, das bei geschlossenem Dach unterhalb des Dachniveaus unter dem Deckel 4 liegt. In diesen Fällen übernimmt das Windleitelement keine Abdeckfunktion.

Im folgenden sind mit "Entlüftungsstellung" Stellungen des Windabweisers 3 bzw. der Lüftungsklappe 3a bezeichnet, in welchen der Windabweiser 3 bzw. die Lüftungsklappe 3a von vorn anströmende Luft nach oben umlenkt, während mit "Belüftungsstellung" Stellungen des Windabweisers 3 bzw. der Lüftungsklappe 3a bezeichnet seien, in der von vom anströmende Luft nach unten in die Fahrzeuginnenraum umgeleitet wird.

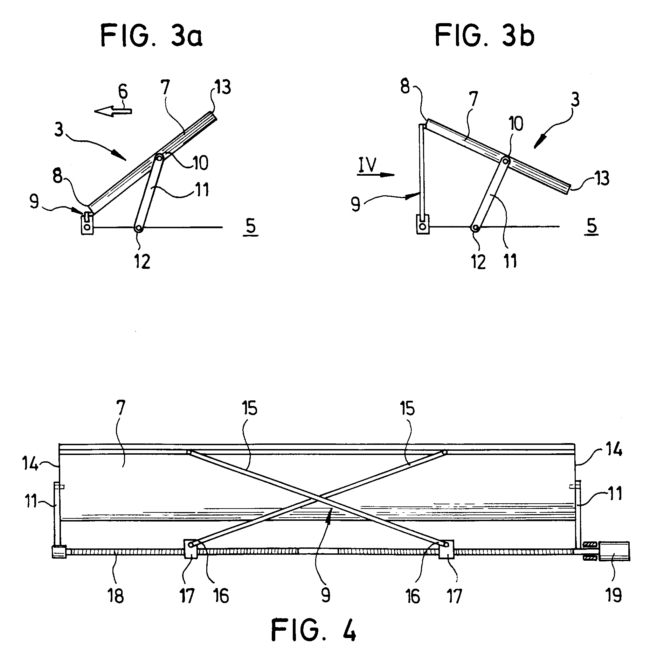

FIG. 2 zeigt schematisch einen Dachquerschnitt mit geöffnetem Deckel 4 und mit dem Windabweiser 3 in Entlüftungsstellung. Die Lüftungsklappe 3a befindet sich in Entlüftungsstellung in ähnlicher Stellung wie der in FIG. 2 gezeigte Windabweiser 3. FIG. 3a und 3b zeigen den Windabweiser 3 im Detail in Entlüftungs- bzw. Belüftungsstellung. Es kann sich dabei jedoch ebenso um die Lüftungsklappe 3a handeln. Ein Windabweiserblatt 7 ist an seiner Vorderkante 8 mit einer Scherenanordnung 9 und in seinem Mittelabschnitt mit dem einen Ende 10 eines Ausstellhebels 11 verbunden, wobei das andere Ende 12 des Ausstellhebels 11 um eine dachfeste Achse schwenkbar montiert ist. In der Entlüftungsstellung in FIG. 3a ist die Scherenanordnung 9 eingefahren, so daß die Vorderkante 8 des Windabweiserblatts 7 unterhalb der Hinterkante 13 liegt, wogegen in FIG. 3b die Scherenanordnung 9 ausgefahren ist, so daß die Vorderkante 8 des Windabweiserblatts 7 oberhalb der Hinterkante 13 liegt, da die Scherenanordnung in ausgefahrener Stellung eine größere Höhe als der Ausstellhebel 11 erreicht. Bei der Stellung in FIG. 3a, die im allgemeinen bei höheren Fahrzeuggeschwindigkeiten bevorzugt ist, bewirkt die angehobene Hinterkante 13 des Windabweiserblatts 7, daß von vom anströmende Luft im Bereich des vorderen Randes der Dachöffnung 5 nach oben abgelenkt wird. Dadurch werden Störgeräusche, die durch die Anströmung der Luft im Bereich des vorderen Randes der Dachöffnung 5 entstehen und im Fahrzeuginnenraum resonant verstärkt werden, verringert. Ferner wird eine direkte Anströmung der Fahrzeuginsassen verhindert. Bei der Stellung in FIG. 3b, die im allgemeinen bei niedrigeren Geschwindigkeiten bevorzugt ist, bewirkt die angehobene Vorderkante 8 des Windabweiserblatts 7, daß von vorn anströmende Luft nach unten in den Fahrzeuginnenraum gelenkt wird, um für raschen Luftaustausch im Fahrzeuginneren bzw. eine Kühlung des Fahrzeuginnenraums und der Fahrzeuginsassen zu sorgen.

FIG. 4 zeigt eine Ansicht des Windabweisers 3 bzw. der Lüftungsklappe 3a aus FIG. 3b in Richtung des mit A bezeichneten Pfeils in FIG. 3b. Man erkennt, daß an jeder Stirnseite 14 des Windabweiserblatts 7 jeweils ein Ausstellhebel 11 vorgesehen ist. Die Scherenanordnung 9 ist im Mittelabschnitt des Windabweiserblattes 7 angeordnet und weist zwei gekreuzte Scherenstangen 15 auf, deren unteres Ende 16 jeweils mit einer Mutter 17 schwenkbar verbunden ist, die auf einer über einen Spindelantrieb 19 angetriebenen Gewindespindel 18 sitzt, die sich parallel zu dem Windabweiserblatt 7 erstreckt. Die oberen Enden der Scherenstangen 15 sind jeweils schwenkbar und verschiebbar mit der Vorderkante 8 des Windabweiserblatts 7 verbunden. Die Gewinde der beiden Muttern 17 sind entgegengesetzt geschnitten, so daß eine Drehung der Spindel 18 in die eine bzw. andere Richtung ein Bewegung der Muttern 17 aufeinander zu bzw. voneinander weg bewirkt. Die Scherenstangen 15 werden dadurch aufgestellt bzw. eingefahren, und die Vorderkante 8 des Windabweiserblatts 7 wird angehoben bzw. abgesenkt, so daß mittels des Spindelantriebs 19 zwischen Entlüftungs bzw. Belüftungsstellung gewechselt werden kann.

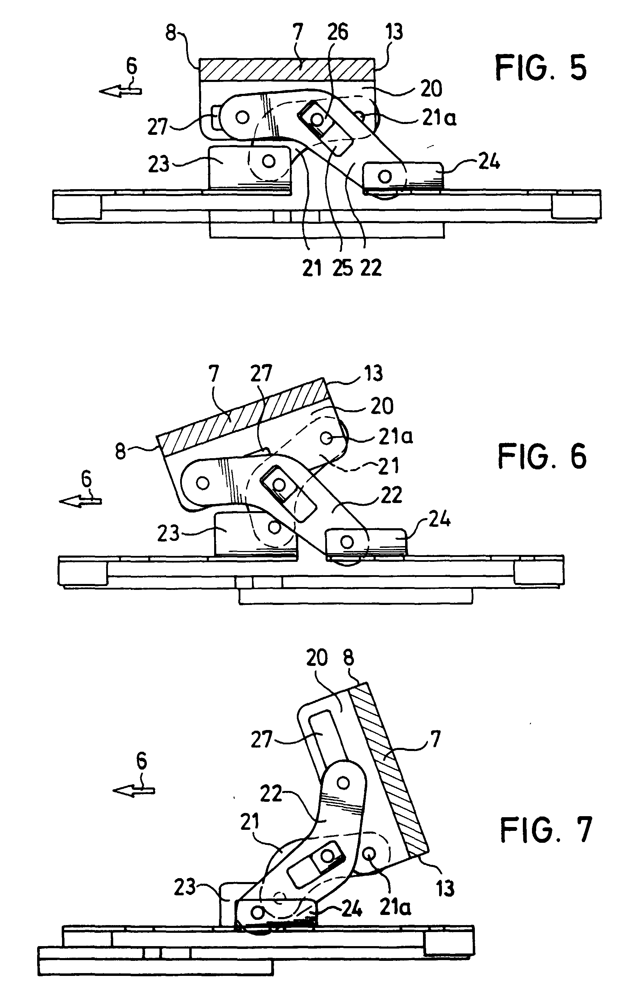

FIG. 5 bis 7 zeigen Seitenansichten eines Windabweisers bzw. einer Lüftungsklappe mit Windabweiserblatt 7 mit einer anderen Ausführungsform des Verstellmechanismus in verschiedenen Stellungen. In FIG. 5 ist der Windabweiser in Neutralstellung gezeigt, d.h. es findet weder eine Belüftung noch eine Entlüftung statt. Das Windabweiserblatt 7 ist an seinen Stirnseiten 14 jeweils mit einer Halterung 20 fest verbunden, an welche das obere Ende eines Ausstellhebels 21 um ein Gelenk 21a schwenkbar und das obere Ende eines weiteren Ausstellhebels 22 schwenkbar und verschiebbar angekoppelt bist. Dabei ist ein an dem Hebel 22 schwenkbar befestigter Schuh (nicht dargestellt) in einem in der Halterung 20 in Querrichtung des Windabweiserblatts 7 ausgebildeten Schlitz 27 verschiebbar. In der in FIG. 5 gezeigten Stellung befindet sich der Schuh dabei im mittleren Abschnitt des Schlitzes 27. Die unteren Enden der Ausstellhebel 21 und 22 sind schwenkbar mit Basisteilen 23 bzw. 24 verbunden, welche in Dachlängsrichtung mittels eines nicht gezeigten Antriebs gegeneinander verschiebbar sind. Im vorliegenden Ausführungsbeispiel ist das Basisteil 23 dachfest angeordnet. Die Ausstellhebel 21 und 22 sind in ihren Mittelabschnitten schwenkbar und verschiebbar miteinander verbunden. Dabei ist in dem Hebel 22 ein Schlitz 25 längs des Hebels 22 ausgebildet, in welchem ein an dem Hebel 21 schwenkbar befestigter Schuh 26 verschiebbar ist. Die Hebel 21 und 22 laufen in der in FIG. 5 gezeigten Stellung über Kreuz. Die Hebel 21 und 22 sind als Winkelhebel ausgebildet. Alle Schwenkachsen in FIG. 5 bis 7 sind parallel zueinander in Dachquerrichtung (d.h. quer zur Fahrtrichtung 6) ausgerichtet. Die in FIG. 5 bis 7 gezeigte Anordnung ist im allgemeinen auf beiden Stirnseiten des Windabweiserblattes 7 gleichartig ausgebildet.

FIG. 6 zeigt den Windabweiser bzw. die Lüftungsklappe in einer Entlüftungsstellung. Die Basisteile 23 und 24 wurden aufeinander zu verschoben. Der Schuh des Hebels 22 liegt nun am vorderen Ende des Schlitzes 27 an. Die Orientierung des Hebels 22 ist gegenüber FIG. 5 nahezu unverändert. Aufgrund der schwenkbaren Verbindung der Hebel 21 und 22 über den Schuh 26 ist der Hebel 21 nach oben verschwenkt, so daß die Hinterkante 13 des Windabweiserblatts 7 angehoben ist.

FIG. 7 zeigt den Windabweiser bzw. die Lüftungsklappe in einer Belüftungsstellung. Die Basisteile 23 und 24 sind noch näher aufeinander zu verschoben als in FIG. 6 . Der mit dem oberen Ende des Hebels 22 schwenkbar verbundene Schuh liegt am hinteren Ende des Schlitzes 27 an. Der Hebel 22 ist nun stark nach oben verschwenkt, während der Hebel 21 gegenüber FIG. 6 nach unten verschwenkt ist. Dadurch ist die Vorderkante 8 des Windabweiserblatts 7 nach oben gehoben, während die Hinterkante 13 gegenüber der Stellung in FIG. 6 nach unten abgesenkt ist, so daß sie weit unterhalb der Vorderkante 8 liegt, Dadurch kann das Windabweiserblatt 7 von vorn, d.h. entgegen der Fahrtrichtung 6, anströmende Luft nach unten ablenken.

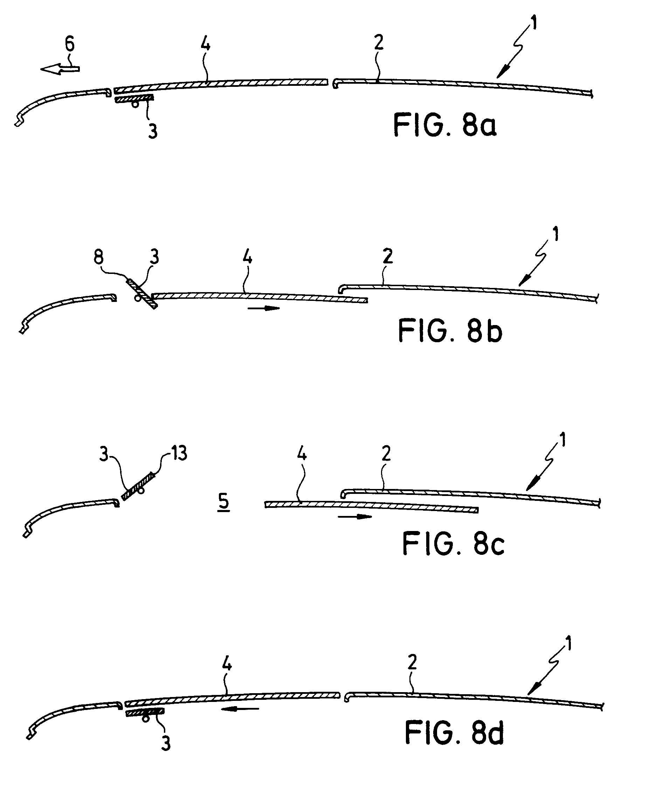

FIG. 8a bis 8d zeigt schematisch verschiedene Betriebsstellungen eines Fahrzeugdaches mit Windabweiser 3 und Deckel 4, wobei die Stellung des Windabweisers 3 von der Stellung des Deckels 4 abhängt. FIG. 8a zeigt den Deckel 4 in Schließstellung, wobei der Windabweiser 3 beispielsweise wie gezeigt unterhalb des Deckels 4 liegt. Der Windabweiser könnte jedoch auch vor dem Deckel 4 unterhalb der Dachhaut 2 liegen, oder er kann als Teil der Dachabdeckung vor dem Deckel 4 in der Dachöffnung 5 liegen. FIG. 8b zeigt den Deckel 4 in leichter Teilöffnungsstellung. Der Deckel 4 ist dabei entgegen der Fahrtrichtung 6 leicht nach hinten verschoben. Der Windabweiser 3 wird dadurch selbsttätig in eine Belüftungsstellung gebracht, wobei die Vorderkante 8 des Windabweiserblatts 7 oberhalb des Dachniveaus liegt. Diese Stellung ist für eine Schnelldurchlüftung gedacht, d.h. das Einleiten anströmender Luft in das Fahrzeuginnere bewirkt einen raschen Austausch des dort befindlichen Luftvolumens. Dies ist vor allem dann wünschenswert, wenn das Fahrzeug z.B. längere Zeit mit geschlossenem Deckel in der Sonne geparkt war, so daß sich das im Fahrzeuginnenraum befindliche Luftvolumen stark erhitzen konnte. Wenn nun das Fahrzeug gestartet wird, ist es für die Fahrzeuginsassen wünschenswert, diese erhitzte Luft möglichst rasch gegen kühlere Umgebungsluft auszutauschen. Dazu kann der Deckel 4 in die in FIG. 8b gezeigte Teilöffnungsstellung gebracht werden. Die daraus resultierende Belüftungsstellung des Windabweisers 3 bewirkt einen raschen Luftaustausch, der rascher stattfindet, als wenn wie bei bekannten Systemen der Deckel 4 gleich ganz geöffnet wird und der Windabweiser in die feste Entlüftungsposition kommt. FIG. 8c zeigt den Deckel 4 in weiter geöffneter Stellung. Der Windabweiser 3 ist nun selbsttätig in eine Entlüftungsstellung gebracht. Die Koppelung zwischen Deckel 4 und Windabweiser 3 ist dabei so ausgelegt, daß zunächst mit fortschreitender Deckelöffnung die Hinterkante 13 des Windabweiserblatts 7 des Windabweisers 3 immer weiter ausgestellt wird, bis bei einer bestimmten Öffnungsstellung des Deckels 4 der Windabweiser 3 seine endgültige Entlüftungsstellung erreicht hat, die er bei weiterer Öffnung des Deckels 4 dann beibehält. Dies ist insofern von Vorteil, als in der Belüftungsphase zu Beginn der Fahrt die Luft im Fahrzeuginneren rasch ausgetauscht wird, während im normalen Fahrbetrieb, d.h. bei höherer Fahrgeschwindigkeit, im wesentlichen die herkömmliche Windabweiserfunktion, d.h. die Entlüftungsstellung, erwünscht ist. FIG. 8d zeigt schließlich den Deckel 4 in wieder geschlossener Stellung. Beim Schließvorgang des Deckels 4 wird der Windabweiser 3 vom Deckel 4 überfahren und in seine Ausgangsposition (z.B. unterhalb des Deckels 4) zurückgezwungen.

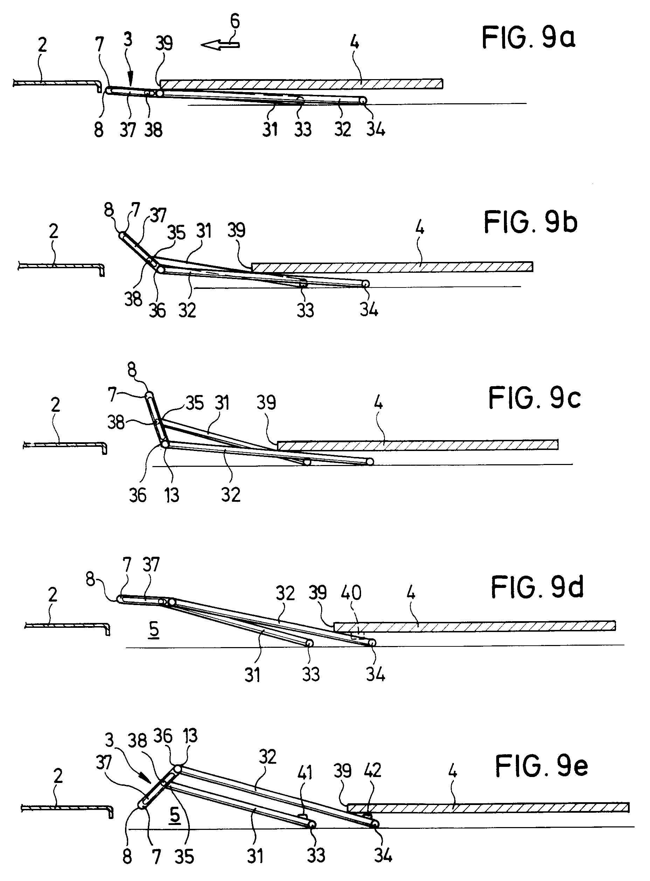

FIG. 9a bis 9e zeigen eine Verstellmechanik für den Windabweiser 3 im Detail, welche die anhand der FIG. 8a bis 8d beschriebenen Funktionen erfüllt. In FIG. 9a ist der Deckel 4 aus der Schließstellung um ein etwa der Breite des Windabweiserblattes 7 entsprechendes Stück nach hinten verschoben. Im gezeigten Beispiel liegt das Windabweiserblatt 7 dabei in flacher Stellung hinter dem vorderen Rand der Dachöffnung 5. Der Windabweiser 3 weist zwei Ausstellhebel 31 und 32 auf, deren hintere Enden 33 bzw. 34 um dachfeste Achsen schwenkbar angeordnet sind, wobei sie in Dachlängsrichtung (Fahrtrichtung 6) gegeneinander um einen bestimmten Abstand versetzt sind. Der weiter vorn angelenkte Hebel 31 ist kürzer als der Hebel 32. Das vordere Ende 36 des Hebels 32 ist mit der Hinterkante 13 des Windabweiserblatts 7 schwenkbar verbunden. Das Windabweiserblatt 7 weist eine seitliche Nut 37 auf, die in Querrichtung des Windabweiserblattes 7 verläuft und welcher ein Schuh 38 verschiebbar geführt ist, der schwenkbar mit dem vorderen Ende 35 des Hebels 31 verbunden ist. Alle Schwenkachsen sind parallel zueinander in Dachquerrichtung orientiert. Die Hebel 31 und 32 sind mit Federn (nicht dargestellt) nach oben vorgespannt, so daß die Vorderkante 39 des Deckels 4 als Anschlag für beide Hebel 31 und 32 wirkt. Die Vorderkante 39 des Deckels 4 liegt dabei einen bestimmte Strecke oberhalb der dachfest angelenkten Enden 33 bzw. 34 der Hebel 31 und 32.

Bei der in FIG. 9a gezeigten Stellung befindet sich der Schuh 38 im hinteren Bereich der Nut 37. Die Vorderkante 39 des Deckels 4 steht in der Nähe der vorderen Enden 35 bzw. 36 der Hebel 31 und 32, so daß die beiden Hebel 31 und 32 nahezu parallel zueinander ausgerichtet sind. Es versteht sich, daß die Hebel 31 und 32 in Dachquerrichtung leicht gegeneinander versetzt angeordnet sind.

In FIG. 9b ist der Deckel 4 eine bestimmte Strecke weiter nach hinten verschoben. Die Vorderkante 39 des Deckels 4 liegt dabei jeweils etwa in der Mitte der Hebel 31 und 32. Die vorderen Enden 35 bzw. 36 der Hebel 31 und 32 werden durch die Veränderung des Anlagepunkte, d.h. die Position der Vorderkante 39 des Deckels 4, aufgrund der mechanischen Vorspannung nach oben bewegt. Das vordere Ende 35 des Hebels 31 kann sich dabei weiter nach oben bewegen als das vordere Ende 36 des Hebels 32, da die dachfeste Schwenkachse des Hebels 31 an dessen hinterem Ende 33, weiter vom liegt als die entsprechende Schwenkachse des Hebels 32 an dessen hinterem Ende 34. Die Verschwenkung des Hebels 32 führt zu einer Anhebung der Hinterkante 13 des Windabweiserblatts 7. Die entsprechende stärkere Verschwenkung des Hebels 31 bewirkt, daß sich der Schuh 38 in der Nut 37 in Richtung Vorderkante 8 des Windabweiserblatts 7 verschiebt, wobei die Vorderkante 8 des Windabweiserblattes 7 stärker als dessen Hinterkante 13 angehoben wird, so daß die Vorderkante 8 deutlich oberhalb der Hinterkante 13 liegt. Das Windabweiserblatt 7 nimmt somit eine Belüftungsstellung ein.

FIG. 9c zeigt eine Stellung des Deckels 4, in der er weiter geöffnet, d.h. weiter nach hinten verschoben ist. Der Anlagepunkt der Hebel 31 und 32, d.h. die Vorderkante 39 des Deckels, ist weiter nach hinten verschoben. Die Hebel 31 und 32 sind beide weiter nach oben verschwenkt als in FIG. 9b, wobei der Unterschied in den Schwenkwinkeln der Hebel 31 und 32 zugenommen hat, d.h. Hebel 31 ist wesentlich stärker noch oben verschwenkt als Hebel 32, so daß das Windabweiserblatt 7 zum einen insgesamt weiter angehoben ist als in FIG. 9b und zum anderen stärker verschwenkt ist, wobei die Vorderkante 8 oben liegt, so daß das Windabweiserblatt 7 eine ausgeprägtere Belüftungsstellung einnimmt als in FIG. 9b. Der Hebel 31 liegt an einem Anschlag 41 (in FIG. 9e angedeutet) an, so daß eine weitere Öffnungsbewegung des Deckels 4 kein zusätzliches Verschwenken des Hebels 31 mehr bewirkt. Das Windabweiserblatt hat somit in der in FIG. 9c gezeigten Stellung seine maximale Belüftungsstellung erreicht.

In FIG. 9d ist der Deckel 4 weiter geöffnet. Dies bewirkt ein weiteres Ausschwenken des Hebels 32, während die Stellung des Hebels 31 konstant bleibt. Die Ausstellwinkel der beiden Hebel 31 und 32 nähern sich dadurch wieder an. Die Hinterkante 13 des Windabweiserblattes 7 bewegt sich nach oben, während sich die Vorderkante 8 mit der Verschwenkung des Windabweiserblattes 7 aufgrund des in konstanter Position verharrenden Schuhs 38 bzw. des vorderen Endes 35 des Hebels 31 nach unten bewegt. In FIG. 9d hat das Windabweiserblatt 7 gerade wieder eine flache Orientierung wie in FIG. 9a erreicht. Allerdings ist das Windabweiserblatt 7 gegenüber der Stellung gemäß FIG. 9a nach oben verschoben, so daß das Windabweiserblatt in dieser Stellung durchaus eine belüftende oder entlüftende Funktion (z.B. in Abhängigkeit von der Entfernung vom Dachrand) erfüllen kann.

Bei der in FIG. 9e gezeigten Öffnungsstellung des Deckels 4 ist schließlich auch der Hebel 32 soweit ausgeschwenkt, daß er an einem Anschlag 42 anliegt, so daß eine weitere Öffnungsbewegung des Deckels 4 die Stellung des Windabweisers 3 bzw. des Windabweiserblatts 7 nicht mehr verändert. Das Windabweiserblatt 7 nimmt dabei eine ausgeprägte Entlüftungsstellung ein, wobei die Vorderkante 8 des Windabweiserblattes 7 weit unterhalb der Hinterkante 13 liegt. Die beiden Hebel 31 und 32 weisen in dieser Stellung einen ähnlichen Verschwenkungswinkel auf, so daß sie annähernd parallel zueinander orientiert sind.

Beim Schließen des Deckels 4 verläuft die beschriebene selbsttätige Verstellung des Windabweiserblattes 7 in umgekehrter Reihenfolge.

Es versteht sich, daß der genaue Ablauf der Verstellung des Windabweisers 3 unter anderem von der Wahl der Längen der Hebel 31 und 32, von der Anordnung der Schwenkachsen sowie von der Positionierung der Anschläge 41 und 42 abhängt. Die in FIG. 9a bis 9e gezeigte Anordnung ist im allgemeinen auf beiden Stirnseiten des Windabweiserblattes 7 gleichartig ausgebildet.

Die in FIG. 9a bis 9e beschriebene Mechanik ist nicht auf Ausführungsformen beschränkt, bei denen das Windabweiserblatt 7 in Schließstellung vor dem Deckel 4 liegt. Vielmehr kann Windabweiserblatt 7 in Schließstellung auch vor dem Deckel 4 in der Dachöffnung 5 liegen und eine Abdeckfunktion erfüllen, wie dies in FIG. 1a skizziert ist.

Statt der Deckelvorderkante 39 kann ein Verstellbewegungen des Deckels mitmachendes Teil 40 als Anschlag für die Aufwärtsbewegung der Ausstellhebel 31, 32 benutzt werden. Ein solches Teil 40 ist in FIG. 9d schematisch angedeutet.

Das Prinzip der Kopplung der Windabweiserverstellung an die Öffnungs- bzw. Schließbewegung des Deckels 4 ist in keiner Weise auf die in FIG. 9a bis 9e gezeigte Mechanik beschränkt. Beispielsweise könnte ebenso eine Doppelgelenkmechanik wie in FIG. 5 bis 7 oder eine Scherenanordnung wie in FIG. 3a, 3b und 4 verwendet werden, indem beispielsweise das Basisteil 24 bzw. der Spindelantrieb 19 in Kopplung mit der Öffnungs/Schließbewegung des Deckel angetrieben wird.

Die Mechanik kann so gestaltet sein, daß sich das Windabweiserblatt bei der Deckelöffnung im Uhrzeigersinn oder gegen den Uhrzeigersinn verschwenkt wird.

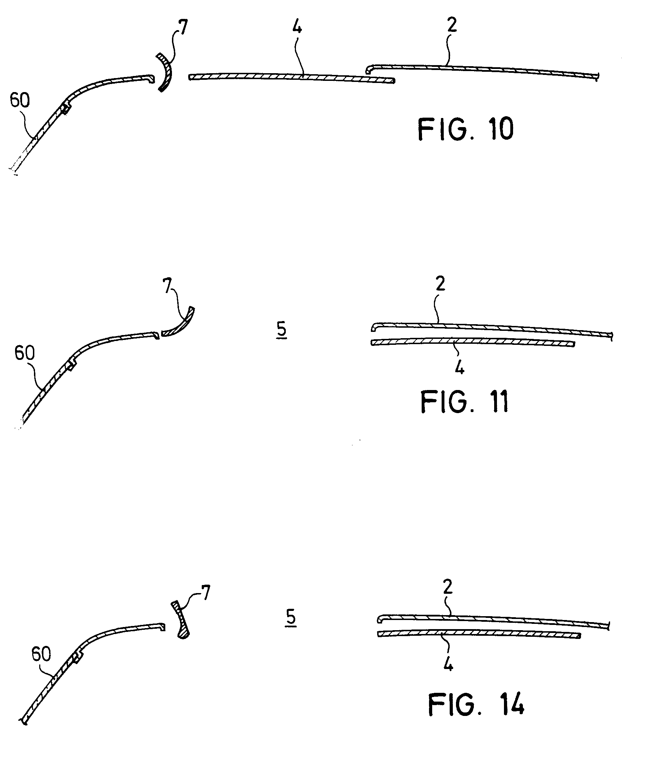

FIG. 10 bis 14 zeigen schematisch verschiedene Ausführungsformen des Windabweiserblatts 7. Unabhängig von der in der Zeichnung gewählten Darstellung kann das Windleitelement dabei als Windabweiser oder als Lüftungsklappe ausgeführt sein. In den FIG. 10 und 11 ist ein Windabweiserblatt 7 veranschaulicht, das einen nach vorn bzw. oben gekrummten Querschnitt in halbkreisförmiger oder elliptischer Form aufweist. Solch eine Ausbildung bewirkt, daß das Windabweiserblatt 7 in bestimmten Stellungen sowohl belüftend als auch entlüftend wirken kann. Insbesondere kann das gekrümmte Windabweiserblatt in der in FIG. 10 gezeigten aufrechten Stellung, in der seine Längskanten nach vorn ragen, aufgrund der Formgebung die Luft zum Teil nach oben und zum Teil nach unten ablenken. Dies bedeutet, daß der Fahrzeuginnenraum mittels des Windabweiserblatts 7 über die Dachöffnung aktiv belüftet werden kann, während das Windabweiserblatt 7 zugleich der Geräuschentwicklung der anströmenden Luft entgegenwirkt. Ein weiterer Vorteil dieser Formgebung besteht darin, daß die Luft in Richtung der Frontscheibe 60 gelenkt wird, so daß die Fahrzeuginsassen nicht direkt angeblasen werden. In der Stellung gemäß FIG. 11 übernimmt das Windabweiserblatt dagegen nur eine Entlüftungstunktion

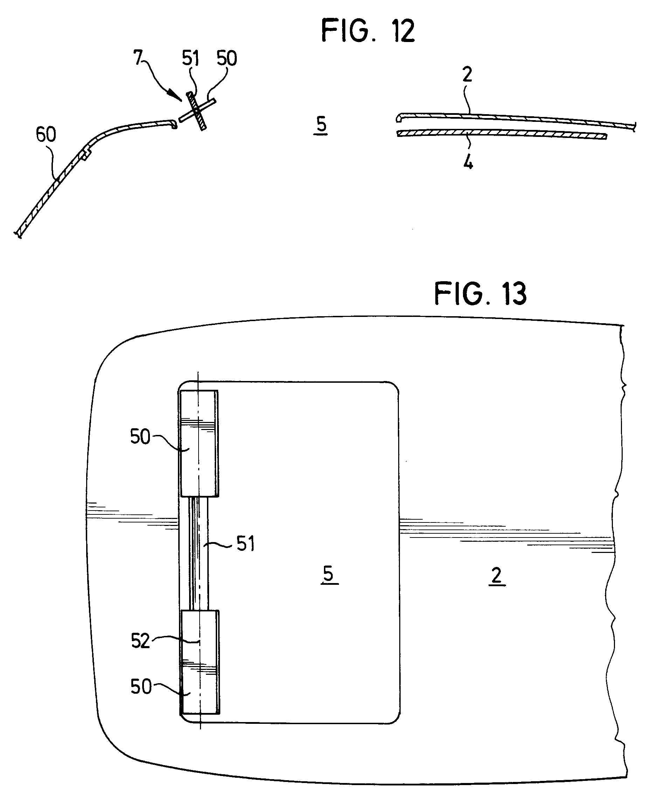

FIG. 12 und 13 zeigen einen segmentierten Windabweiser im Querschnitt bzw. in einer Aufsicht. Dabei weist das Windabweiserblatt 7 zwei in Entlüftungsstellungen verstellbare Randsegmente 50 sowie ein in Entlüftungs- und Belüftungsstellungen verstellbares Mittelsegment 51 auf. Die Randsegmente 50 erfüllen daher bei mindestens teilweise geöffnetem Dach eine Entlüftungsfunktion, während das Mittelsegment 51 sowohl für eine Belüftung als auch eine Entlüftung sorgen kann. Das verstellbare Mittelsegment 51 ist dabei über eine in Dachquerrichtung verlaufende Achse 52 schwenkbar mit den Randsegmenten 50 verbunden. Das verstellbare Segment muß nicht mittig angeordnet sein, sondern kann auch fahrerseitig oder beifahrerseitig angeordnet sein. Ebenso können mehrere verstellbare Segmente vorgesehen sein.

FIG. 14 zeigt einen Windabweiser mit einem im Querschnitt profilierten Windabweiserblatt 7. Auch in diesem Fall kann ähnlich wie bei der Ausführungsform der FIG. 10 und 11 durch die Formgebung des Windabweiserblatts 7 anströmende Luft nach vorn in Richtung Frontscheibe 60 geleitet werden. Der Windabweiser gemäß FIG. 14 kann auch ähnlich der Ausführungsform der FIG. 12 und 13 mit einer oder mehreren verstellbaren Klappen versehen werden.

Wenn der Windabweiser 3 wie in FIG. 1a in der Dachöffnung 2 vor dem Deckel 4 angeordnet ist und damit selbst eine Abdeckungsfunktion übernimmt, kann er auch bei geschlossenem Deckel 4 entsprechend verstellt werden, um für eine Belüftung bzw. Entlüftung zu sorgen.

Bisher wurde der Windabweiser in Verbindung mit einem Schiebedeckel erläutert. Der Deckel 4 soll dabei jedoch stellvertretend für alle verschiedenen Arten der Abdeckung einer Fahrzeugdachöffnung stehen, wie z.B. Lamellendächer (mehrteiliger Deckel), Schiebe-Hebe-Dächer, Spoilerdächer, Faltdächer usw.

Die Verstellung des Windabweisers bzw. der Lüftungsklappe kann grundsätzlich unabhängig von der Deckelstellung oder daran gekoppelt erfolgen. In ersterem Fall kann die Verstellung von Hand oder, wie in FIG. 1b schematisch angedeutet, mittels eines Elektromotors 61 in Handsteuerung über beispielsweise ein Bedienfeld 62 erfolgen. Die Verstellung kann jedoch auch selbsttätig in Abhängigkeit von der Fahrzeuggeschwindigkeit und/oder der Außentemperatur mit Hilfe eines Geschwindigkeitssensors 63 bzw. eines Temperatursensors 64 erfolgen. Eine solche Anordnung kann auch zur Verstellung einer Lüftungsklappe ohne Deckel, wie in FIG. Der Antrieb des Deckels 4 erfolgt vorzugsweise elektrisch.

### Bezugszeichenliste

- Fahrzeugdach: **1**
- Dachhaut: **2**
- Windabweiser: **3**
- Lüftungsklappe: **3a**
- Deckel: **4**
- Dachöffnung: **5**
- Fahrtrichtung: **6**
- Windabweiserblatt: **7**
- Vorderkante von 7: **8**
- Scherenanordnung: **9**
- Ende von 11: **10**
- Ausstellhebel: **11**
- Ende von 11: **12**
- Hinterkante von 7: **13**
- Stirnseiten von 7: **14**
- Scherenstangen: **15**
- unteres Ende von 15: **16**
- Mutter: **17**
- Gewindespindel: **18**
- Spindelantrieb: **19**
- Halterung: **20**
- Ausstellhebel: **21**
- Ausstellhebel: **22**
- Basisteil: **23**
- Basisteil: **24**
- Schlitz in 22: **25**
- Schuh an 21: **26**
- Schlitz in 7: **27**

## Patentansprüche

1. Windleitelement für ein Fahrzeugdach mit einer verschließbaren Dachöffnung mit einem entlang der Vorderkante der Dachöffnung angeordneten Windleitblatt, welches um eine quer zur Fahrzeuglängsachse liegende Achse schwenkbar ist und sich bei verschlossener Dachöffnung unterhalb des Dachniveaus befindet oder auf Dachniveau als Abdeckung mindestens eines Teils der Dachöffnung wirkt, sowie mit einer Verstellvorrichtung für das Windleitblatt, mit welcher das Windleitblatt in eine Stellung bringbar ist, in welcher die anströmende Luft nach oben geleitet wird, **dadurch gekennzeichnet**, daß die Verstellvorrichtung so ausgebildet ist, daß das Windleitblatt (7) in eine Stellung bringbar ist, in welcher mindestens ein Teil der anströmenden Luft nach unten geleitet wird.

2. Windleitelement nach Anspruch 1, dadurch gekennzeichnet, daß bei der Stellung des Windleitblatts (7), in welcher mindestens ein Teil der anströmenden Luft nach unten geleitet wird, die Vorderkante (8) des Windleitblatts - zumindestens teilweise - oberhalb des Dachniveaus und oberhalb der Hinterkante (13) des Windleitblatts liegt.

3. Windleitelement nach Anspruch 1 oder 2, dadurch gekennzeichnet, daß das Windleitelement als Deckelklappe ausgebildet ist, welche in Schließstellung die gesamte Dachöffnung (5) verschließt.

4. Windleitelement nach Anspruch 1 oder 2, dadurch gekennzeichnet, daß ein Deckel (4) vorgesehen ist, welcher die Dachöffnung (5) mindestens zum Teil verschließt, wobei das Windleitelement als Windabweiser ausgebildet ist, oder auf Dachniveau als Ahdeckung mindestens eines Teiles der Dachöffnung wirkt.

5. Windleitelement nach Anspruch 4, dadurch gekennzeichnet, daß die Verstellvorrichtung so ausgebildet ist, daß die Stellung des Windleitelements (3) jeweils von der Stellung des Deckels (4) bestimmt ist.

6. Windleitelement nach Anspruch 5, dadurch gekennzeichnet, daß die Verstellvorrichtung so ausgelegt ist, daß zu Beginn der Öffnungsbewegung des Deckels (4) mit fortschreitender Öffnungsbewegung des Deckels die Vorderkante (8) des Windleitblatts (7) relativ zu der Hinterkante (13) des Windleitblatts zunehmend nach oben schwenkt.

7. Windleitelement nach Anspruch 6, dadurch gekennzeichnet, daß die Verstellvorrichtung so ausgelegt ist, daß zwischen einer ersten Öffnungsstellung und einer zweiten Öffnungsstellung des Deckels (4) bei einer Öffnungsbewegung des Deckels die Vorderkante (8) des Windleitblatts (7) relativ zu der Hinterkante (13) des Windleitblatts zunehmend nach unten schwenkt.

8. Windleitelement nach Anspruch 7, dadurch gekennzeichnet, daß die Verstellvorrichtung so ausgelegt ist, daß das Windleitblatt (7) ab der zweiten Öffnungsstellung des Deckels (4) eine konstante Stellung einnimmt, wobei die Vorderkante (8) des Windleitblattes unterhalb der Hinterkante (13) des Windleitblattes liegt.

9. Windleitelement nach einem der Ansprüche 4 bis 8, dadurch gekennzeichnet, daß die Verstellanordnung mindestens ein Paar in Längsrichtung angeordnete und in Längsrichtung gegeneinander versetzte Ausstellhebel (31, 32) aufweist, deren Hinterende (33, 34) jeweils um eine dachfeste Achse schwenkbar gelagert ist und die mechanisch nach oben vorgespannt sind.

10. Windleitelement nach Anspruch 9, dadurch gekennzeichnet, daß das vordere Ende (35) des vorderen Ausstellhebels (31) in einer in Querrichtung an dem Windleitblatt (7) angebrachten Nut (37) gleitend geführt ist und das vordere Ende (36) des hinteren Ausstellhebels (32) mit einer Kante des Windleitblatts schwenkbar verbunden ist.

11. Windleitelement nach Anspruch und 10, dadurch gekennzeichnet, daß die Vorderkante (39) des Deckels (4) oder ein Verstellbewegungen des Deckels mitmachendes Teil (40) einen Anschlag für die Aufwärtsbewegung der Ausstellhebel (31, 32) bildet, solange der Deckel die erste Öffnungsstellung nicht erreicht hat.

12. Windleitelement nach Anspruch 11, dadurch gekennzeichnet, daß ein dachfester mechanischer Anschlag (41) die Aufwärtsbewegung des vorderen Ausstellhebels (31) begrenzt, sobald der Deckel (4) die erste Öffnungsstellung erreicht oder überschritten hat.

13. Windleitelement nach Anspruch 12, dadurch gekennzeichnet, daß dachfeste mechanische Anschläge die Aufwärtsbewegung beider Ausstellhebel (31, 32) begrenzen, sobald der Deckel (4) die zweite Öffnungsstellung erreicht oder überschritten hat.

14. Windleitelement nach Anspruch 9 bis 13, dadurch gekennzeichnet, die Verstellanordnung so ausgebildet ist, daß die Schließbewegung des Deckels (4) ein Niederdrücken der Ausstellhebel (31, 32) bewirkt.

15. Windleitelement nach einem der Ansprüche 9 bis 14, dadurch gekennzeichnet, daß an jeder Stirnseite des Windleitblatts (7) ein Paar von Ausstellhebeln (31, 32) vorgesehen ist.

16. Windleitelement nach einem der Ansprüche 4 bis 15, dadurch gekennzeichnet, daß die Öffnungsbewegung des Deckels (4) in einer Verschiebung in der Dachebene besteht.

17. Windleitelement nach einem der Ansprüche 4 bis 16, dadurch gekennzeichnet, daß der Deckel (4) aus mehreren Lamellen besteht.

18. Windleitelement nach einem der Ansprüche 1 bis 4, dadurch gekennzeichnet, daß das Windleitblatt (7) an seiner Vorderkante (8) mit einer Scherenanordnung (9) und im Mittelbereich an den beiden Stirnseiten schwenkbar mit jeweils dem einen Ende (10) eines Ausstellhebels (11) verbunden ist, dessen anderes Ende (12) um eine dachfeste Achse schwenkbar ist.

19. Windleitelement nach Anspruch 18, dadurch gekennzeichnet, daß die Scherenanordnung (9) zwei Scherenstangen (15) aufweist und von einer Gewindespindel (18) angetrieben ist, auf welcher zwei Muttern (17) mit entgegengesetzt geschnittenen Gewinden sitzen, welche jeweils schwenkbar mit dem unteren Ende (16) einer der Scherenstangen verbunden sind.

20. Windleitelement nach Anspruch 19, dadurch gekennzeichnet, daß die Ausstellhöhe der Scherenanordnung (9) im voll ausgestellten Zustand größer ist als die Länge der Ausstellhebel (11).

21. Windleitelement nach Anspruch 1 bis 4, dadurch gekennzeichnet, daß der Verstellmechanismus an den beiden Stirnseiten (14) des Windleitblatts (7) jeweils als Doppelgelenkanordnung ausgebildet ist.

22. Windleitelement nach Anspruch 21, dadurch gekennzeichnet, daß die Doppelgelenkanordnung zwei Ausstellhebel (21, 22) aufweist, deren unteres Ende jeweils mit einem Basisteil (23, 24) schwenkbar verbunden ist, wobei das obere Ende des einen Ausstellhebels (21) schwenkbar mit dem Windleitblatt (7) verbunden ist und das obere Ende des anderen Ausstellhebels (22) schwenkbar und in Querrichtung des Windleitelements verschiebbar mit dem Windleitblatt verbunden ist, wobei die Basisteile in Dachlängsrichtung gegeneinander verschiebbar sind und wobei die beiden Ausstellhebel in ihrem mittleren Abschnitt verschiebbar und schwenkbar miteinander verbunden sind.

23. Windleitelement nach einem der Ansprüche 1 oder 18 bis 22, dadurch gekennzeichnet, daß die Verstellung des Windleitblatts (7) mittels eines Elektroantriebs (61) erfolgt.

24. Windleitelement nach einem der Ansprüche 1 bis 4 oder 18 bis 23, dadurch gekennzeichnet, daß die Verstellung des Windleitblatts (7) in Abhängigkeit von der Fahrzeuggeschwindigkeit und/oder der Außentemperatur erfolgt.

25. Windleitelement nach einem der vorhergehenden Ansprüche, dadurch gekennzeichnet, daß das Windleitblatt (7) ein halbkreisförmiges oder elliptisches Profil aufweist.

26. Windleitelement nach einem der vorhergehenden Ansprüche, dadurch gekennzeichnet, daß das Windleitblatt (7) mit einer Profilierung versehen ist.

27. Windleitelement nach einem der vorhergehenden Ansprüche, dadurch gekennzeichnet, daß das Windleitblatt (7) in Segmente (50, 51) unterteilt ist und ein Teil der Segmente (51) gegenüber den übrigen Segmenten (50) verstellbar ist.

28. Windleitelement nach einem der Ansprüche 18 bis 27, dadurch gekennzeichnet, daß ein Deckel (4) aus mehreren Lamellen vorgesehen ist.
